# EUROPEAN PATENT APPLICATION

(11) **EP 1 811 204 A1**
(43) Date of publication of application: **25.07.2007**
(21) Application number: 05785608.0
(22) Date of filing: 22.09.2005
(51) Int. Cl.: F16H 25/22, F16H 25/24

(54) **BALL SCREW MECHANISM**

(30) Priority: 24.09.2004 JP 2004276387
(71) Applicant: NSK LTD., Shinagawa-ku, Tokyo 141-8560 (JP)
(72) Inventor: YAMASHITA, Tomofumi c/o NSK LTD., Kanagawa 251-8501 (JP); JINGU, Yoshinori c/o NSK LTD., Kanagawa 251-8501 (JP); SAITOU, Shingo c/o NSK LTD., Kanagawa 251-8501 (JP)
(74) Representative: Schuster, Thomas
(86) International application number: PCT/JP2005/017495
(87) International publication number: WO 2006/033397

(57) **Abstract**

The outside diameter φ of a land portion 1c is set to be larger than a BCD. Thus, when a ball 3 goes into a deep portion (a portion close to an axis line O of a screw shaft 1), the land portion 1c of the screw shaft 1 guides the ball. Consequently, the circulation of the ball 3 can smoothly be performed.

## Description

### Technical Field

The present invention relates to a ball screw mechanism assembled to a general industrial machinery or used in an automobile.

### Background Art

Ordinarily, a ball screw mechanism consists of a screw shaft, a nut, and balls which roll in a raceway passage formed between the screw shaft and the nut. In what is called a circulationpiece typeball screwmechanism, a circulation piece or a circulation tube is attached to the nut so as to return the balls from one end of the raceway passage to the other end thereof. However, when the circulationpiece or the circulation tube is attached to the nut, the thickness of the nut increases. Sometimes, an interference between the nut and a peripheral component presents a problem.

Recently, laborsaving in operating vehicles has progressed. For example, a system adapted to operate a transmission and a parking brake of an automobile by not hand but by force of an electric motor has been developed. Sometimes, an electric actuator for such a purpose employs a ball screw mechanism to highly efficiently convert a rotation, which is transmitted from the electric motor, into an axial direction movement.

Meanwhile, the following Patent Document 1 discloses a ball screw structure configured so that a circulation passage is formed in a screw shaft. With such a ball screw structure, the thickness of the nut can be reduced.
Patent Document 1: Japanese Patent Unexamined Publication No. JP-A-2003-97663

### Disclosure of the Invention

### Problems that the Invention is to Solve

According to a conventional technique described in the Patent Document 1, when the ball moves from a screw groove to the circulation passage, the ball radially sinks into the circulation passage to approach the axis line of the screw shaft while moving along the circulation passage. However, according to the structure illustrated in FIGS. 10 to 12 in the Patent Document 1, when the ball having rolled along the direction of the lead angle of the screw shaft deflects, the balls sinks, so that the land portion of the screw shaft cannot guide the ball. Thus, the ball is held between the land portion of the nut and the circulation passage of the screw shaft.
Consequently, there is a fear that the screw shaft may be locked to the nut.

The invention is accomplished in view of the problems of such conventional techniques. An object of the invention is to provide a ball screw mechanism that is compact and that is enabled to ensure a smooth operation.

### Means for Solving the Problems

According to the invention, there is provided a ball screw mechanism comprising:
a screw shaft, of which outer circumferential surface is formed with a male screw groove;
a nut disposed to surround the screw shaft, an inner circumferential surface of the nut being formed with a female groove,; and
a plurality of balls rollably disposed along a raceway passage formed between both the screw grooves opposed to each other, wherein
the screw shaft constitutes a circulation passage connecting one end of the male screw to the other end of the male screw groove, in such a manner that
   the balls approach to an axis line of the screw shaft when the balls move toward the circulation passage from one end of the male screw groove,
   the balls go away from the axis line of the screw shaft when the balls move toward the other end of the male screw groove from the circulation passage, and
a distance between the axis line of the screw shaft and an edge of a side wall at an end portion of the circulation passage is larger than (1/2) of a ball center diameter (hereunder referred to as BCD).

### Advantages of the Invention

It is preferable that the depth of the circulation passage is larger than the width of the male screw groove.

In the conventional ball screw structure, the outside diameter of the screw shaft is less than the BCD. Thus, the land portion of the screw shaft cannot guide the balls, so that locking thereof tends to occur easily. On the other hand, according to the invention, the distance from the axis line of the screw shaft to the edge of the side wall at one end portion of the circulation passage is set to be larger than (1/2) of the BCD. Thus, when the ball goes into a deep portion of the circulation passage (a portion close to the axis line of the screw shaft), for example, the land portion (a part of which is located between parts of the male screw groove and serves as a side wall of the circulation passage) of the screw shaft guides the ball. Consequently, the circulation of the ball can smoothly be performed. It is sufficient for guiding the ball that a range, in which the land portion of the screw shaft is larger than a cross-sectionally circular region whose diameter is the BCD, is at least a portion (for example, the vicinity of each of the one end and the other end of the male groove) from which the ball starts circulating). Even when this range is provided over the entire circumference thereof, an operation of the ball screw is not affected. Also, in this case, it is easy to machine the ball screw. Therefore, it is preferable that this range is provided over the entire circumference of the land portion. Additionally, the case of obtaining advantages of the invention is not limited to the case where the land portion of the screw shaft is larger than the cross-sectionally circular region whose diameter is the BCD. It is sufficient therefor that the distance from the axis line of the screw shaft to the edge of the side wall at an end portion of the circulation passage is larger than (1/2) of the BCD.

It is preferable that the circulation passage is formed directly in an outer circumferential surface of the screw shaft.

### Brief Description of the Drawings

[FIG. 1]

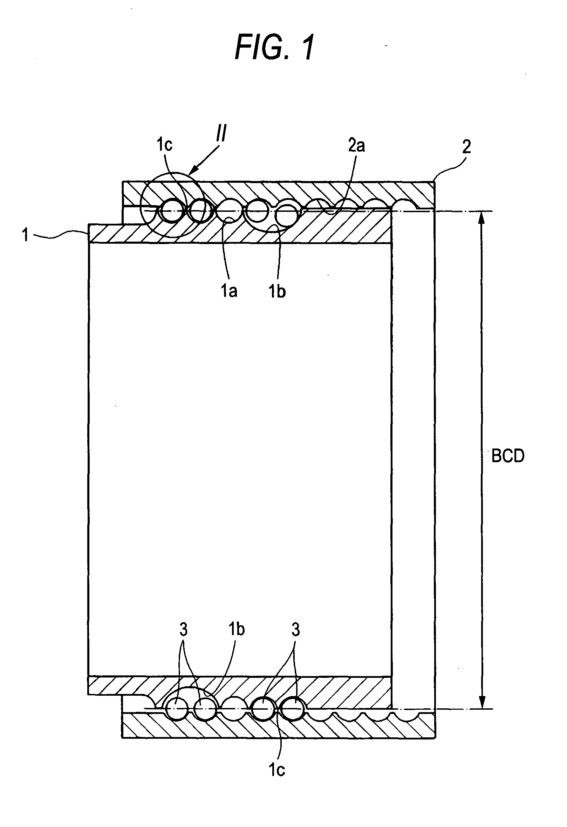

   FIG. 1 is a cross-sectional view illustrating a ball screw mechanism that is an embodiment of the invention.
[FIG. 2]

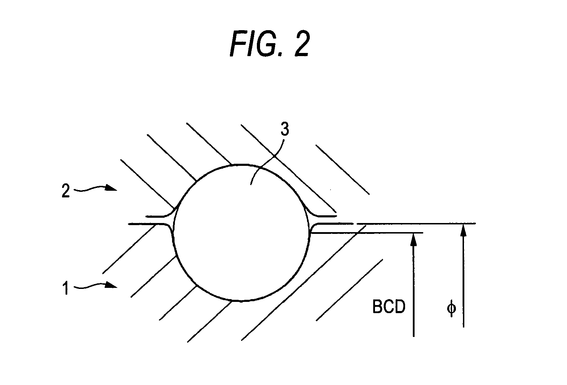

   FIG. 2 is an enlarged view illustrating a part of the mechanism, which is indicated by an arrow II.
[FIG. 3]

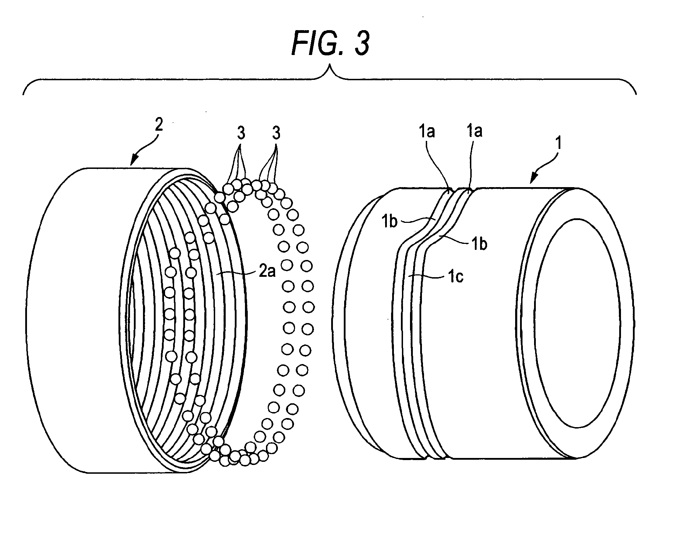

   FIG. 3 is an exploded perspective view illustrating the ball screw mechanism according to the embodiment of the invention.
[FIG. 4]

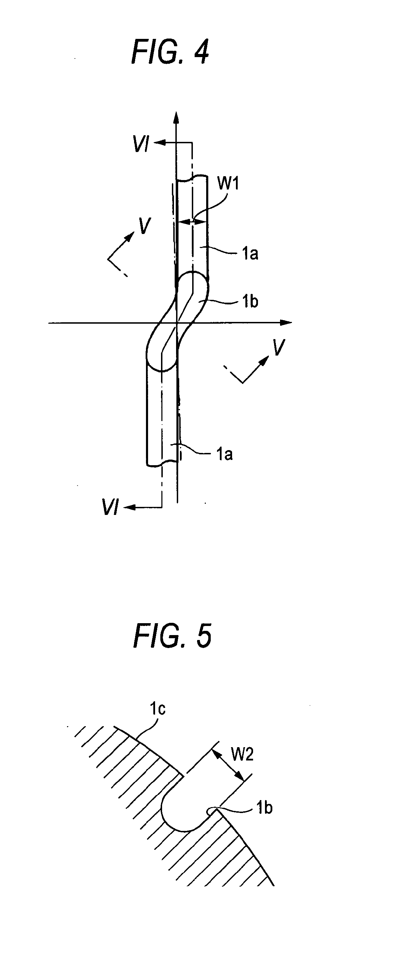

   FIG. 4 is a view illustrating a circulation passage 1b, which is taken from a side of a screw shaft 1.
[FIG. 5]
   FIG. 5 is a cross-sectional view illustrating the circulation passage, which is taken along line V-V in the direction of an arrow shown in FIG. 4.
[FIG. 6]

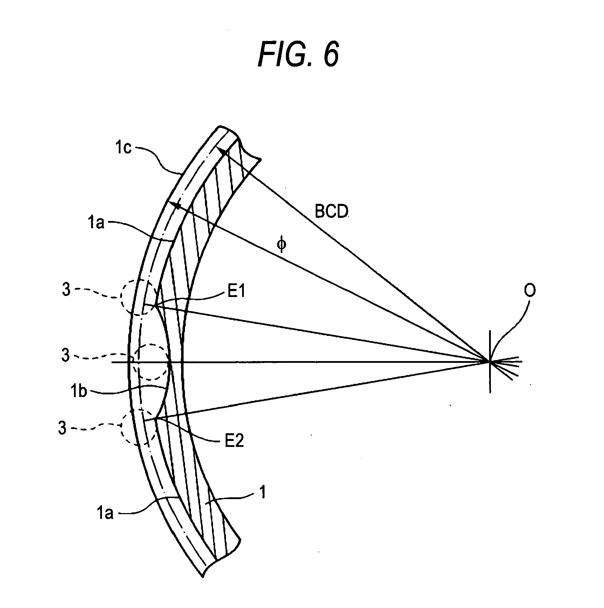

   FIG. 6 is a cross-sectional view illustrating the circulation passage, which is taken along line VI-VI in the direction of an arrow shown in FIG. 4.

### Description of Reference Numerals and Signs

- 1: screw shaft
- 1b: circulation passage
- 2: nut
- 3: ball

### Best Mode for Carrying Out the Invention

In FIGS. 1 and 3, a male screw groove 1a is formed on an outer circumferential surface of a screw shaft 1 that is connected to a driven member and that is supported to be unrotatable and to be movable only in the direction of an axis line. A cylindrical nut 2 supported to be enabled only to rotate with respect to a housing (not shown) is disposed to surround the screw shaft 1. A female groove 2a is formed on an inner circumferential surface of the nut 2. A plurality of balls 3 are disposed to be able to roll in a spiral raceway passage formed between both the screw grooves.

As shown in FIG. 3, each of the plurality of male screw grooves 1a (two male screw grooves are shown in FIG. 3) terminates by winding around the screw shaft 1 a little less than one turn. One end of each of the plurality of male screw grooves 1a is connected to the other end thereof by a circulation passage 1b A land portion 1c is formed between adjacent ones of the male screw grooves 1a.

FIG. 4 is a view illustrating the circulation passage 1b, which is taken from a side of the screw shaft 1. FIG. 5 is a cross-sectional view illustrating the circulation passage, which is taken along line V-V in the direction of an arrow shown in FIG. 4. FIG. 6 is a cross-sectional view illustrating the circulation passage, which is taken along line VI-VI in the direction of an arrow shown in FIG. 4.

As shown in FIG. 4, the circulation passage 1b formed directly on the outer circumferential surface of the screw shaft 1 has a meandering groove geometry. Also, as shown in FIG. 6, the circulation passage 16 has a shape configured to become deeper toward the center thereof (that is, to become closer to the axis line O of the screw shaft 1). Although shown in FIG. 6 too small and unclearly, the circulation passage 1b and each of one end E1 and the other end E2 of the male screw groove 1a are connected by a smoothly curved surface. Thus, the circulation of the balls 3 is smoothly performed.

As shown in FIG. 6, a ball center diameter BCD corresponding to each of the balls 3 is set to be less than the outside diameter φ of the land portion 1c of the screw shaft 1. Additionally, as shown in FIGS. 4 and 5, the groove width W2 of the circulation passage 1b is set to be larger than the groove width W1 of the male screw groove 1a.

An operation of the ball screw mechanism according to the present embodiment is described below. When the nut 2 is rotationally driven by the not-shown electric motor, such a rotation movement is efficiently converted into a movement in the direction of the axis line of the screw shaft 1 by the ball 3 that rolls in the raceway passage and that circulates from one end to the other end of the raceway passage. A not-shown driven member connected thereto can be moved in the direction of the axis line.

According to the present embodiment, while the ball screw mechanism operates, the ball 3 rolls to approach the axis line O of the screw shaft 1 when moving from one end E1 of the male screw groove 1a toward the circulation passage 1b On the other hand, when moving toward the other end E1 of the male screw groove 1a from the circulation passage 1b, the ball 3 rolls to go away from the axis line O of the screw shaft 1.
At that time, when the outside diameter φ of the land portion 1c (which constitutes a side wall of the circulation passage 1b) is less than the BCD, the land portion 1c of the screw shaft 1 cannot appropriately guide the ball. Thus, biting is easily occurred between the land portion 1c of the screw shaft 1 and the land portion of the nut 2.
On the other hand, according to the present embodiment, the outside diameter φ of the land portion 1c is set to be larger than the BCD. Thus, when the ball 3 goes into a deep portion of the circulation passage 1b (a portion close to the axis line O of the screw shaft 1), the land portion 1c of the screw shaft 1 guides the ball 3. Consequently, the circulation of the ball 3 can smoothly be performed.
As is apparent from the foregoing description, it is unnecessary that the land portion 1c of the screw shaft 1 is larger than a cross-sectionally circular region, whose diameter is the BCD, over the entire circumference thereof. It is sufficient that at least the distance from the axis line O of the screw shaft 1 to the edge of a side wall at an end portion of the circulation passage 1b ((1/2) φ shown in FIG. 6) is larger than (1/2) the BCD.

Also, referring to FIGS. 4 and 5, the groove width W2 of the circulation passage 1b is set to be larger than that W1 of the male screw groove 1a. Thus, a no-load area can easily be formed by ensuring the raceway space of the ball 3 in the circulation passage 1b. Consequently, smooth circulation can be ensured.

Although the invention has been described with reference to the embodiment, it is apparent that the invention is not restricted to the above embodiment and can appropriately be modified or improved. Although the cross-sectional shape of the circulation passage 1b shown in FIG. 5 according to the present embodiment is a single-R-shape (incidentally, in a range in which the curvature of the cross-sectional shape of the passage is larger than the BCD, the cross-sectional shape is a straight line or a curve whose curvature is larger than that of the single-R-shape). However, a Gothic arch shape may be employed as the cross-sectional shape of the circulation passage 1b.

Next, the embodiment of the invention is described by referring to the accompanying drawings. FIG. 1 is a cross-sectional view illustrating the ball screwmechanism that is the present embodiment. FIG. 2 is an enlarged view illustrating a part of the mechanism, which is indicated by an arrow II. FIG. 3 is an exploded perspective view illustrating the ball screw mechanism according to the present embodiment.

This application claims priority from Japanese Patent Application No. 2004-276387 filed September 24, 2004, which is hereby incorporated by reference herein in its entirety. Industrial Applicability

The ball screw mechanism, which is compact and can ensure a smooth operation, can be applied to a general industrial machinery and to an automobile.

## Claims

1. A ball screw mechanism comprising:
a screw shaft, of which outer circumferential surface is formed with a male screw groove;
a nut disposed to surround the screw shaft, an inner circumferential surface of the nut being formed with a female groove,; and
a plurality of balls rollably disposed along a raceway passage formed between both the screw grooves opposed to each other, wherein
the screw shaft constitutes a circulation passage connecting one end of the male screw to the other end of the male screw groove, in such a manner that
the balls approach to an axis line of the screw shaft when the balls move toward the circulation passage from one end of the male screw groove,
the balls go away from the axis line of the screw shaft when the balls move toward the other end of the male screw groove from the circulation passage, and
a distance between the axis line of the screw shaft and an edge of a side wall at an end portion of the circulation passage is larger than (1/2) of a ball center diameter.

2. The ball screw mechanism according to claim 1, wherein a width of the circulation passage is larger than a groove width of the male screw groove.

3. The ball screw mechanism according to claim 1 or 2, wherein the circulation passage is formed directly in the outer circumferential surface of the screw shaft.
